# EUROPEAN PATENT SPECIFICATION

(11) **EP 2 391 571 B1**
(45) Date of publication and mention of the grant of the patent: **04.11.2015**
(21) Application number: 10735476.3
(22) Date of filing: 29.01.2010
(51) Int. Cl.: B66C 23/72, B66C 23/14, B66C 23/683, B66C 23/76, F16M 11/06, F16M 11/10, F16M 11/18, G03B 17/56, H04N 5/232, F16M 11/24, F16M 11/20

(54) **ARTICULATED JIB**
GELENKIGER SCHWENKARM
FLÈCHE ARTICULÉE

(30) Priority: 30.01.2009 US 363633; 03.02.2009 CA 2653142
(43) Date of publication of application: 07.12.2011
(73) Proprietor: Rotheisler, Randy Joseph, Vancouver, British Columbia V5K 2G4 (CA)
(72) Inventor: Rotheisler, Randy Joseph, Vancouver, British Columbia V5K 2G4 (CA)
(74) Representative: Barker, Rosemary Anne
(86) International application number: PCT/CA2010/000166
(87) International publication number: WO 2010/085901

(56) References cited:
- EP-A1- 0 023 004
- EP-A1- 0 131 664
- SU-A1- 655 639
- US-A- 3 805 834
- US-A- 3 850 307
- US-A- 4 339 100
- US-A- 5 667 186

## Description

### BACKGROUND OF THE INVENTION

### Fi eld of the Invention

The present invention relates to jibs and, in particular, to a simplified, articulated camera jib with improved balance and stability.

### Description of the Reflated Art

It is known to provide articulated camera jibs that allow movement about three distinct horizontal axes. Examples are disclosed in United States Patent Number 5,033,705 issued on July 23, 1997 to Reagan and United States Patent Number 5,192,963 issued on March 9,1993 to Hill. These jibs allow a camera to be moved without requiring movement of a base which supports the jib: However, these jibs typically use timing belts or chain drives to ensure synchronization of all the various elements in order to provide balance and stability. The timing belts or chain drives add undesired structure and weight to the jib.

To overcome the above-mentioned shortcomings of timing behs and chain drives, some articulated camera jibs use linking rods to ensure synchronization of all the various elements. An example of such a jib is disclosed in United States Patent Number 5,531,412 issued on July 2,1996 to Ho. However, the jib disclosed by Ho has a complex structure including four interdependent "four-linking mechanisms". Each of the "four-linking mechanisms" comprises two pairs of parallel linking bars. There is accordingly a need for a simplified, articulated jib with improved balance and stability.

### SUMMARY OF THE INVENTION

It is an object of the present invention to provide a simplified, articulated jib with improved balance and stability. In particular, it is an object of the present invention to provide an improved articulated jib in which each jib arm is independently counterbalanced.

US 3,850,307 discloses on articulated jib having all the features set forth in the preamble of appended claim 1. The present invention provides a jib with additional features specified in the characterising portion of claim 1.

In one embodiment the linking rod is an adjustable length linking rod which includes two threadedly connected portions. The length of the linking rod may be adjusted by changing the degree to which a first said portion of the linking rod is threadedly received by a second said portion of the linking rod. A length of the linking rod between points of connection with the second jib arm and the lever arm is less than a length of the frame bars, of the first jib arm, between respective points of connection with second jib arm and the base. The base is rotatably mounted on a tripod or other suitable mount. The load is preferably equipment used in the film industry such as a camera. However, the jib may also be used to move other types of loads such as magnifying lenses or medical equipment such as operating microscopes.

The jib provides a wide range of movement allowing the load to be moved horizontally, vertical, in a circle or any combination thereof.

In another embodiment of the present invention. Each of the frame bars of the first jib arm may be spaced apart from each other by an elbow spacer at an elbow end of the first jib arm adjacent the second jib arm, and by also at least a mid mounting plate pivotably connected to the first jib arm between the elbow end and an opposite distal end. The frame bars of the first jib arm are connected to the two parallel frame bars of the second jib arm to form a parallelogram link mechanism at the elbow end. A lever arm is pivotably connected at a lower end thereof so as to extend from the mid mounting plate. The linking rod connects the lever arm to the second jib arm. The first counterweight is disposed on the distal end of the first jib arm. The second counterweight is disposed on an upper end of the lever arm.

Advantageously, the length of the linking rod between points of connection with the second jib arm and the lever arm is less than lengths of the frame bars of the first jib arm between their respective points of connection with the second jib arm and the mid mounting plate. Thus the linking rod is shorter than the lengths of the frame bars of the first jib arm. In a preferred embodiment the linking rod is an adjustable length linking rod, in which case it may include two threadably connected portions whereby the length of the linking rod may be adjusted by changing an amount to which a first portion of the linking rod is threadably received by a second the portion of the linking rod.

In one embodiment the frame bars of the first jib arm extend beyond the base, in a direction oppositely disposed relative to the second jib arm, and mid mounting plate is part of the base. In another embodiment the mid mounting plate is mounted on the first jib arm separated from the base in which case the mid mounting plate may be mounted so as to pivot between the frame bars of the first jib arm. The mid mounting plate may be mounted to the frame bars of the first jib arm between the base and the first counterweight.

Advantageously the linking rod extends substantially over and at least slightly non-parallel to the first jib arm and when the jib arm is at least partially retracted serves to retract the second jib arm towards the base.

The second jib arm has a load bearing distal end opposite the elbow. The second jib arm extends beyond the elbow in a direction oppositely disposed relative to the load bearing distal end, to a linking arm end of the second jib arm. A first end of the linking rod is pivotably connected to the lever arm. A second end of the linking rod, opposite the first end, is pivotably connected to the linking arm end of the second jib arm. The first end of the linking arm is pivotably connected to the lever arm spaced from the frame bars of the first jib arm, and so as to be above the first jib arm when the first and second jib arms are retracted. The second counterweight is raised in elevation relative to the first counterweight, both when the first and second jib arms are retracted and when fully extended. The frame bars of the first and second jib arms and the lever arm may be substantially linear.

### BRIEF DESCRIPTION OF DRAWINGS

The invention will be more readily understood from the following description of preferred embodiments thereof given, by way of example only, with reference to the accompanying drawings, in which:
Figure 1 is an elevation side view of an articulated jib in a first position;
Figure 2 is another elevation side view of the articulated jib of Figure 1 in a second position;
Figure 3 is an enlarged, fragmentary elevation view of a connection between a first jib arm and a second jib arm of the articulated jib of Figure 1;
Figure 4 is an enlarged, fragmentary perspective view of the connection between the first jib arm and the second jib arm if the articulated jib of Figure 1;
Figure 5 is an enlarged, fragmentary perspective view of a fulcrum of the articulated jib of Figure 1 ;
Figure 6 is a partly schematic, side elevation view of the articulated jib of Figure 1; and
Figures 7 and 8 are, in side elevation view, a further embodiment of the articulated jib in partially retracted and extended positions respectively

### DESCRIPTION OF THE PREFERRED EMBODIMENTS

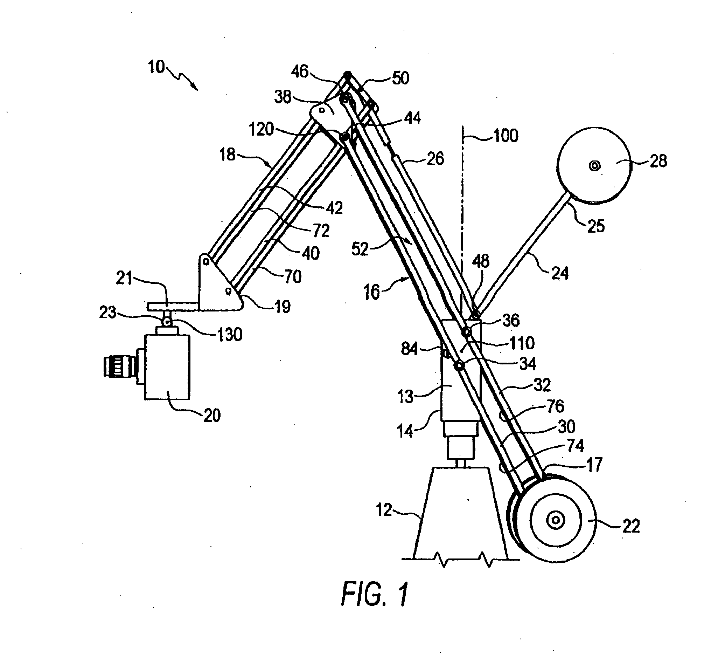

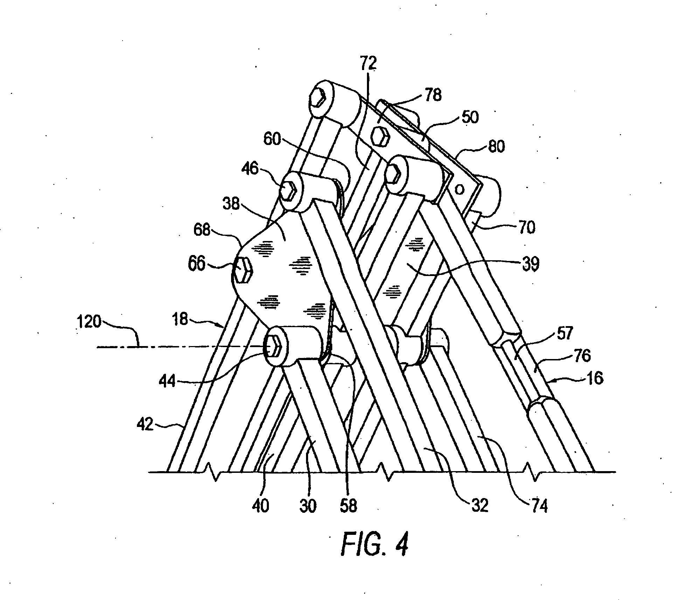

Referring to the drawings and first to Figure 1 this shows an articulated jib 10 rotatably mounted on a tripod 12, which is shown in fragment. The jib 10 is rotatable on the tripod 12 about a vertical axis 100. In this example, a base 14 supports the jib 10 and functions as a fulcrum. A first jib arm 16 is defined by four longitudinal frame bars 30, 32, 74, and 76 which are aligned in parallel, in a generally quadrate formation (as best shown in Figure 4). The first jib arm 16 is pivotably connected to the base 14 by pivot pins 34 and 36, and functions as a bascule to allow movement about a first generally horizontal pivot axis 110. A second jib arm 18 is also defined by four longitudinal frame bars 40, 42, 70, 72 which are aligned in parallel, in a generally quadrate formation (as best shown in Figure 4). The second jib arm 18 is pivotably connected to the first jib arm 16 at bolt 44 to allow movement about a second generally horizontal pivot axis 120. A camera 20 is mounted on a platform 21 at a distal end 19 of the second jib arm 18. The camera 20 is pivotable about a support 23 to allow movement about a third horizontal pivot axis 130.

A first counterweight 22 is disposed at an end 17 of the first jib arm 16 opposite the second jib arm 18 and camera 20. The first counterweight 22 counterbalances the second jib arm 18 and the camera 20 as the first jib arm 16 pivots about the first horizontal pivot axis 110. A second counterweight 28 is disposed at a distal end 25 of a lever arm 24. The lever arm 24 is pivotably connected to the base 14 by a pivot pin 84. A linking rod 26 connects the lever arm 24 to the second jib arm 18. The second counterweight 28 counterbalances the camera 20 as the second jib arm 18 pivots about the second horizontal pivot axis 120.

In Figure 1 only a first side of the jib 10 is shown in detail. A second side of the jib 10 is a mirror image of the first side of the jib 10. For example, frame bars 30 and 32 of the first jib arm 16 are on the first side of the jib 10 while frame bars 74 and 76 are on the second side of the jib 10. Likewise, frame bars 40 and 42 of the second jib arm 18 are on the first side of the jib 10 while frame bars 70 and 72 are on the second side of the jib 10. Therefore, only the first side of the jib 10 will be described in detail herein. It will be understood that the second side of the jib 10 has a substantially similar structure and functions in a substantially similar manner. Two of the longitudinal frame bars 30 and 32 of the first jib arm 16 are each pivotably connected to a lateral side 13 of the base 14 by pivot pins 34 and 36, respectively. The pivot pins are 34 and 36 are not vertically aligned with one another having regard to the vertical axis 100 about which the jib 10 rotates. A triangular plate 38 is mounted on the second jib arm 18 and extends between two of the longitudinal frame bars 40 and 42 of the second jib arm 18. The longitudinal frame bars 30 and 32 of the first jib arm 16 are connected to the triangular plate 38 by bolts 44 and 45, respectively. The other two longitudinal frame bars 74 and 76 of the first jib arm 16 are coupled to the second side of the jib 10 in a similar manner. The linking rod 26 is connected to the lever arm 24 by a bolt 48 The linking rod 26 is also connected to the second jib arm 18 at a pivot shaft 50

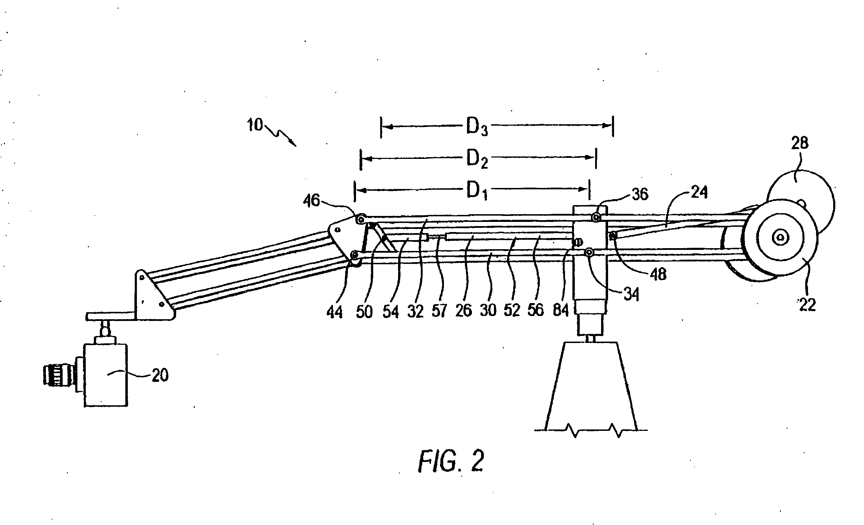

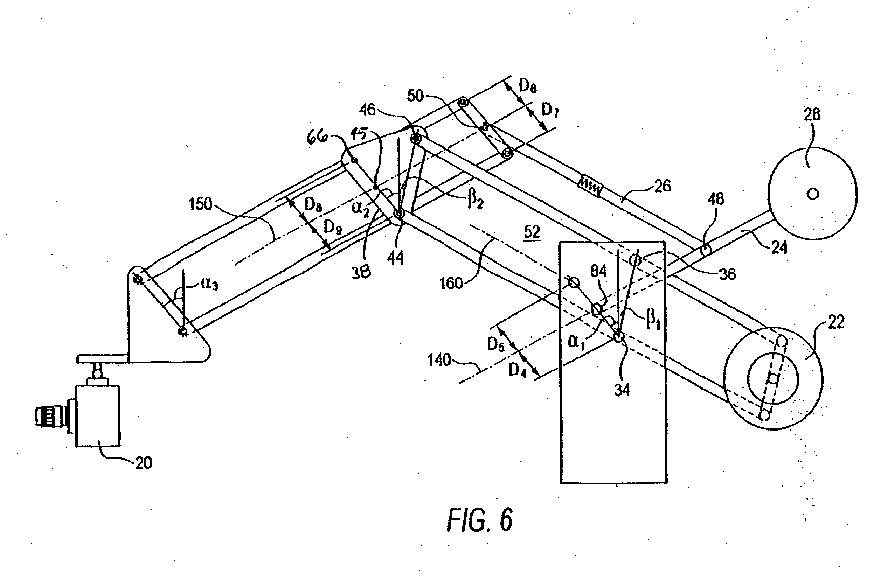

As best shown in Figure 2, the distance D₁ between the pivot pin 34 and bolt 44, which are coupled to the longitudinal frame bar 30 of the first jib arm 16, is substantially equal to the distance D₂ between the pivot pin 36 and bolt 46, which are coupled to the longitudinal frame bar 32 of the first jib arm 16. The pivot pins 34, 36 and bolts 44, 46 define the corners of a first parallelogram link mechanism 52 which is best shown in Figure 6 As seen by comparing Figures 1 and 2, the first parallelogram link mechanism 52 changes shape as the first jib arm 16 pivots about the base 14 This ensures that the first counterweight 22 moves appropriately in the horizontal and vertical directions to counterbalance the second jib arm 18 and the camera 20 through a range of motion.

In Figure 6 angles α₁ and α₂ are substantially equal, and angles β₁ and β₂ are substantially equal Angle α₃ is also substantially equal to angles α₁ and α₂. The jib 10 is designed to maintain angles α₁, α₂, and α₃ equal in response to pivoting by either the first jib 16 or second arm 18. As a result, a longitudinal axis J40 of the lever arm 24 is maintained generally parallel to a longitudinal axis 150 of the second jib arm 18. This ensures that the second counterweight 28 moves appropriately in the horizontal and vertical directions to counterbalance the camera 20 through the range of motion. Distances D₄ to D₉ are all substantially equal to each other. Since operation of a parallelogram link mechanism, or parallel link, is well known in the art and is discussed in United States Patent Number 5,713,545 issued to Nakemura on February 3, 1998, the full disclosure of which is incorporated herein by reference, operation of the parallelogram link mechanism 52 is not discussed in further detail herein.

Referring back to Figure 2, the distance D₃ between the bolt 48, which connects the linking rod to the lever arm 24, and the pivot shaft 50, which connects the linking rod 26 to the second jib arm 18, is less than both distances D₁ and D₂. In this example, the linking rod 26 is an adjustable length linking rod which comprises two portions 54 and 56 which are threadedly connected by a threaded member 57 disposed on an end of a first one of the portions 54 of the linking rod 26. Changing the amount to which the threaded member 57 is threadedly received by a second one of the portions 56 of the linking rod 26 enables distance D₃ to be changed to account for variances in camera weights. In other embodiments, telescoping portions or another means may be used to change the distance D₃ The underlying principle being that a length of the linking rod 26 between its points of connection with the second jib arm 18 and the lever arm 24 (D₃) is less than the length of the frame bars 30, 32, 74, and 76 of the first jib arm 16 between their respective points of connection with the second jib arm 18 and the lever arm 24 (D₁ and D₂).

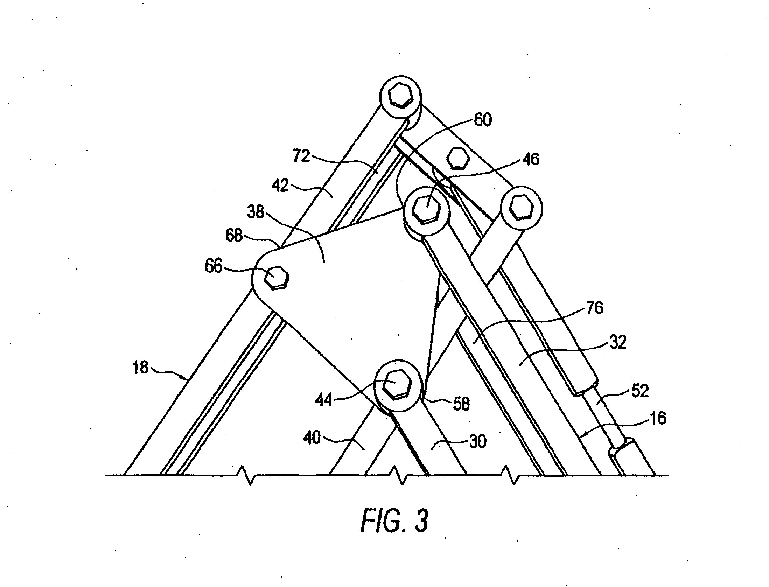

Referring now to Figures 3 and 4 the pivotable connection between the first jib arm 16 and the second jib arm 18 is shown in greater detail. Longitudinal frame bars 30 and 32 of the first jib arm 16 are connected to the triangular plate 38 by corresponding bolts 44 and 46 adjacent respective vertices 58 and 60 of the triangular plate. As best shown in Figure 4, longitudinal frame bars 40 and 42 of the second jib arm 18 are also connected to the triangular plate 38. A first one of the longitudinal bars 40 of the second jib arm 18 is pivotably mounted on the bolt 44 which also connects the first one of the longitudinal frame bars 30 of the first jib arm 16 to the triangular plate 38. This connection allows the second jib arm 18 to pivot about the second axis 120. The triangular plate 38 is also pivotable mounted on the bolt 44 between the first and second jib arms 16 and 18. The second jib arm 18 and the triangular plate 38 are independently pivotable. A boh 66 connects a third vertex 68 of the triangular plate 38 to a second one of the longitudinal frame bars 42 of the second jib arm 18. The second jib arm 18 also has a pair of end links 78 and 80, each of which links a respective corresponding two of the longitudinal frame bars 40, 42 and 70, 72 of the second jib arm 18 The pivot shaft 50 which connects the linking bar to the second jib arm 18 extends between the end links 78 and 80.

The other two longitudinal frame bars 70 and 72 of the second jib arm 18 are coupled to a corresponding triangular plate 39 on the second side of the jib 10 in a similar manner, as are the other two longitudinal frame bars 74 and 76 of the first jib arm 16.

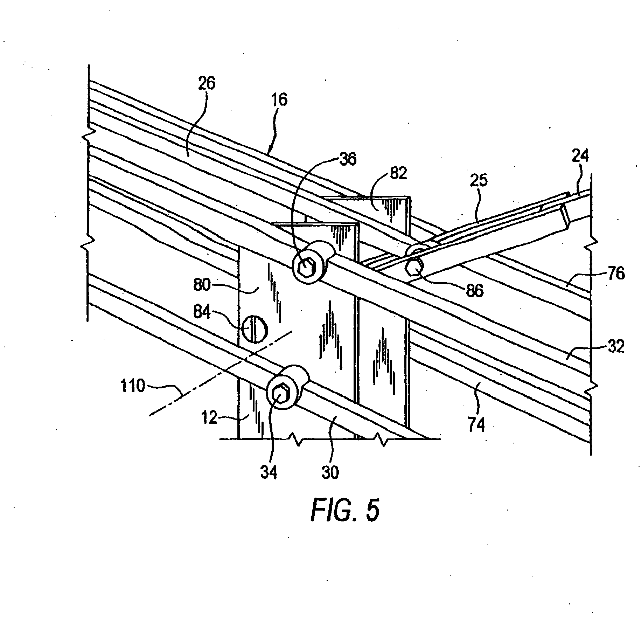

Referring now to Figure 5, the pivotable connection between the first jib arm 16 and the base 14 is shown in greater detail. The base 14 has a U-shape with spaced-apart lateral side walls 80 and 82. Two of the longitudinal frame bars 30 and 32 of are pivotably connected to an outer side of a first one of the lateral side walls 80 by corresponding pivot pins 34 and 36. The other two of the longitudinal frame bars 74 and 76 are pivotably connected to an outer side of a second of the lateral side walls 82 by corresponding pivot pins (not shown). Figure 5 also shows the pivotable connection between the base 14 and the lever arm 24. The lever arm 24 has a bifurcated end portion 25 which is pivotably mounted on a pivot shaft 84 that extends between the lateral side walls 80 and 82 of the U-shaped base 14. The linking bar 26 is pivotably connected to the bifurcated end portion 25 of the lever arm 26 by a bolt 86.

In operation, a cameraman (not shown) may move the camera 20 to a desired position. The parallelogram link mechanism 52 and first counterweight 22 balance the first jib arm 16 as it is pivoted about the first horizontal pivot axis 110. The second counterweight 28 balances the second jib arm 18 as it is pivoted about the second horizontal axis 120. The camera 20 may thereby be moved, in a balanced manner, toward or away from a stationary object being filmed without requiring movement of the tripod 12. Alternatively, the camera 20 may be moved, in a balanced manner, to follow a moving object being filmed without requiring movement of the tripod 12.

Since the first and second jib arms 16 and 18 are independently counterbalanced, the counterweights 22 and 28 are only a minimal distance from the first and second pivot axes 110 and 120. This allows the jib 10 to be used in restricted spaces commonly found on location in the film industry. The compact design of the jib 10 also allows it to be folded and easily transported between locations. The jib 10 is easily scalable and can therefore be custom manufactured for use with a wide range of cameras including small, lightweight, personal video cameras and large, heavy, motion picture cameras. The simplified structure allows for low cost construction.

Although in this example the jib 10 is used to move the camera 20, the jib 10 may be used to move any type of load. For example, the jib 10 may be used to move other equipment used in the film and video industry such as cameras. The jib 10 may also be used to move other types of loads such as magnifying lenses or medical equipment such as operating microscopes. In another embodiment, the jib may be motorized and computer controlled with step motors.

When the jib 10 is set up and balanced, both arms 16 and 18 move in unison as a force is applied to the camera 20 on the terminal end of arm 18. The user does not have to be concerned with positioning one or both of the arms. The operator has only to move the camera, and the jib follows' the camera in a fluid manner as the camera is moved.

With the camera dismounted, that is, with no load on the terminal end of arm 18, no adjustment of the linking rod 26 is required. The length of the linkage rod may be set to equal or very slightly less than the length of D2 in Figure2. Once counterbalanced by weight 22 and 28, the jib will remain balanced throughout entire range of movement of the jib. The balancing will remain neutral even when the jib is fully extended.

In use however, and in order that the jib be commercially useful, a load is carried on the distal end of arm 18. As the load is applied on the terminal end of arm 18, and appropriately counterbalanced the length of the linkage rod 26 is changed. As the jib is extended towards it's fullest extremity, that is into a roughly horizontal position with the camera as far from the base as possible the jib exhibits a marked tendency to "settle" and "lock" into its fully extended position as the "elbow" between arms 16 and 18 becomes linearly aligned or rotated to an over-center locked position. This tendency increases the closer the jib arm gets to fully extended. Once locked, the jib elbow may require considerable upward force to counteract and release the lock. The force gets stronger as the load is increased. When "settled" the two jib arms 16, 18 no longer move freely in relation to each other. The two arms are "unlocked" by pushing up on the elbow, that is the joint between the two arms. The tendency of the jib to lock when fully extended limits the effective usable range of the jib. Locking is inhibited by the length adjustment of the linkage rod 26.

Shortening the linking rod limits the downward travel of the weights 28 on the end of the lever arm 24. Thus even when the second jib arm 18 is in a fully horizontal and fully extended position, the lever arm 24 will still remain on a slight upward angle, and either, without intending to be limiting to a particular theory of operation, the weights 28 on the end of the lever arm 24 will still exert part of their force on that arm, or, that one of the joints (for example the elbow) is being limited from further travel by the limits of the linkages as the jib extends to its furthest range of possible travel. The advantageous points of operation are: a) that the limit of extension arrives in a "soft" way so that the camera does not come to a thumping abrupt stop as the jib is extended fully horizontal, and b) that the length of the linking arm 26 once adjusted to be less than length D2 effectively counteracts the locking effect. The camera thus remains fully mobile, and the two jib arms 16,18 may always move freely in relation to each other.

The primary purpose of reducing the length of the linking arm 26 to less than the length D2 is not merely to position the lever arm 24 and the second jib arm 18 such that they are not parallel, although this a consequence of doing so, but rather the purpose is to limit the travel of counterweight 28 when the arms are increasingly extended to their substantially horizontal attitude. This counters the tendency of the jib, when loaded with a load at it's terminal end, to become increasingly unbalanced as full extension is approached.

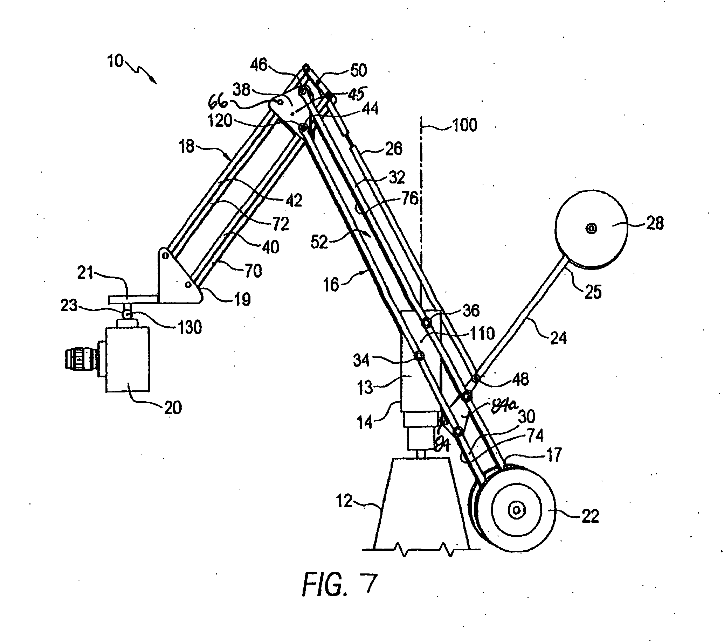

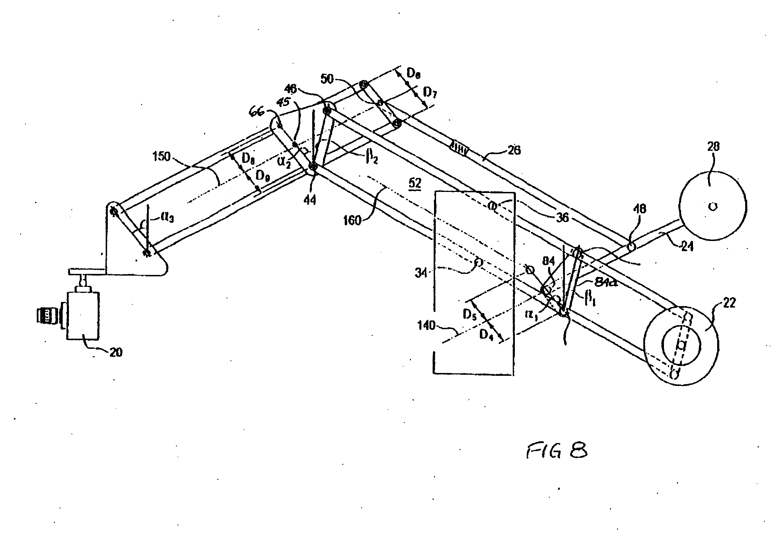

Counteracting of the locking effect may be achieved by varying the position of the mounting point 84 of the lever arm 24 such that the length of linking arm 26 is shorter than the distance between points 84 and 45, that is, is less than the length of the connecting arm to point 84, where point 84 is not necessarily on the base. Thus as seen in Figures 7 and 8 the length of linking arm 26 may be equal to the distance between pivot shaft 84 (now mounted on, so as to extend laterally between a pair mid mounting of plates 84a) and point 45, where point 45 is a point centered between points 44 and 66. The necessary non-parallelism may be achieved by moving the mounting points, for example point 84. If an adjustable linking arm 26 were not provided however, it would not allow adjustment to compensate for cameras of different weights, however. In the embodiment of Figures 7 and 8, instead of mid mounting plate, to which the lever arm is connected, being in effect part of the base as in Figures 1 - 6, that is part of plates 80, 82, the mid mounting plate is a separate plate or plates 84a separate from the base so as to be spaced apart from the base along, and pivotably connected to, the first jib arm towards counter weights 22.

Adjusting the linking rod 26 to be less than D2 in Figures 1 - 6 or less than the length between points 45 and 84 in Figures 7, 8 unbalances the load, in the sense that the counter balancing is not in perfect equilibrium, over a larger portion of its range of travel than would be the case if the linking rod 26 remained the same length as D2 in Figures 1 - 6, and the second jib arm and the lever arm remained parallel. In practice the deviations from neutrality - while wider spread - are very slight, even with cameras of significant weight, and can be easily compensated for by the operator. An adjustable link is preferred as it allows the compensation to be fine tuned to the minimum required to suit different loads.

It will be understood by a person skilled in the art that the terms "vertical" and "horizontal" as used herein are used in relation to the orientations for example described in Figures 1 and 2, and are not intended to limit the scope of the invention.

It will be understood by a person skilled in the art that many of the details provided above are by way of example only and are not intended to limit the scope of the invention which is to be determined with reference to following claims.

## Claims

1. An articulated jib (10) for moving a load (20), the jib being supported on a base (14) and the jib comprising:
a first jib arm (16) pivotably connected to the base, the first jib arm functioning as a bascule and being pivotable about a first axis (110);
a first counterweight (22) disposed on the first jib arm (16);
a second jib (18) arm pivotably connected to the first jib arm, the second jib arm being pivotable about a second axis (120) and the load being disposed at a distal end of the second jib arm;
wherein the first and second jib arms (16, 18) each include two parallel frame bars (30, 32, 74, 76), each of the frame bars of said first jib arm being pivotably connected to the base and connected to the second jib arm (18) to form a parallelogram link mechanism;
a lever arm (24) pivotably connected either to the base (14) or to a mounting plate (84 a) which is mounted on the first jib arm (16) separated from the base;
a linking rod (26) disposed above the first jib arm (16) and connecting the lever arm (24) to the second jib arm (18), the linking rod (26) being pivotably connected to the second jib arm (18); and
a second counterweight (28) disposed at the distal end of the lever arm (24),
**characterised in that** the lever arm (24) extends away from the linking rod (26) on an upward angle and **in that** a length (D3) of the linking rod (26) extending between its points of connection with the second jib arm (18) and the lever arm (24) is less than lengths (D1, D2) of the frame bars (30, 32) of the first jib arm (16) between their respective points of connection with the second jib arm (18) and with the base (14) or the mounting plate (84a), respectively.

2. An articulated jib as claimed in claim 1 further including an elbow spacer (38) between the first jib arm (16) and the second jib arm (18), wherein the first jib arm is connected to the second jib arm at the elbow spacer.

3. An articulated jib as claimed in claim 1 or 2 wherein the lever arm (24) is pivotably connected to a mounting plate (84a) which is pivotably connected to the first jib arm (16), and the mounting plate is disposed between the base (14) and the first counterweight (22).

4. A jib as claimed in any preceding claim wherein the linking rod (26) is an adjustable length linking rod.

5. A jib as claimed in claim 4 wherein the linking rod (26) includes two threadedly connected portions wherein the length of the linking rod may be adjusted by changing an amount of a first said portion of the linking rod which is threadedly received by a second said portion of the linking rod.

6. A jib as claimed in any preceding claim wherein the base (14) is rotatably mounted on a tripod (12).

7. A jib as claimed in any preceding claim wherein the load (20) is a camera.

## Patentansprüche

1. Gelenkausleger (10) zum Bewegen einer Last (20), wobei der Ausleger auf einer Basis (14) getragen wird und der Ausleger Folgendes umfasst:
einen schwenkbar mit der Basis verbundenen ersten Auslegerarm (16), wobei der erste Auslegerarm als Basküle fungiert und um eine erste Achse (110) herum schwenkbar ist;
ein am ersten Auslegerarm (16) angeordnetes erstes Gegengewicht (22);
einen zweiten Auslegerarm (18), der mit dem ersten Auslegerarm schwenkbar verbunden ist, wobei der zweite Auslegerarm um eine zweite Achse (120) herum schwenkbar ist und
die Last an einem distalen Ende des zweiten Auslegerarms angeordnet ist;
wobei der erste und zweite Auslegerarm (16, 18) je zwei parallele Rahmenstangen (30, 32, 74, 76) umfassen, wobei jede der Rahmenstangen des ersten Auslegerarms schwenkbar mit der Basis verbunden und mit dem zweiten Auslegerarm (18) verbunden ist, um einen Parallelogramm-Verbindungsmechanismus zu bilden;
einen Hebelarm (24), der schwenkbar entweder mit der Basis (14) oder mit einer Montageplatte (84a), die am ersten Auslegerarm (16) getrennt von der Basis montiert ist, verbunden ist;
eine Verbindungsstange (26), die oberhalb des ersten Auslegerarms (16) angeordnet ist und den Hebelarm (24) mit dem zweiten Auslegerarm (18) verbindet, wobei die Verbindungsstange (26) schwenkbar mit dem zweiten Auslegerarm (18) verbunden ist; und
ein am distalen Ende des Hebelarms (24) angeordnetes zweites Gegengewicht (28),
**dadurch gekennzeichnet, dass** der Hebelarm (24) weg von der Verbindungsstange (26) in einem Aufwärtswinkel verläuft, und dadurch, dass eine Länge (D3) der Verbindungsstange (26) zwischen ihren Verbindungspunkten mit dem zweiten Auslegerarm (18) verläuft und der Hebelarm (24) weniger als Längen (D1, D2) der Rahmenstangen (30, 32) des ersten Auslegerarms (16) zwischen ihren jeweiligen Verbindungspunkten mit dem zweiten Auslegerarm (18) bzw. mit der Basis (14) oder der Montageplatte (84a) ist.

2. Gelenkausleger nach Anspruch 1, ferner umfassend ein Winkeldistanzstück (38) zwischen dem ersten Auslegerarm (16) und dem zweiten Auslegerarm (18), wobei der erste Auslegerarm mit dem zweiten Auslegerarm am Winkeldistanzstück verbunden ist.

3. Gelenkausleger nach Anspruch 1 oder 2, wobei der Hebelarm (24) schwenkbar mit einer Montageplatte (84a) verbunden ist, die schwenkbar mit dem ersten Auslegerarm (16) verbunden ist, und die Montageplatte zwischen der Basis (14) und dem ersten Gegengewicht (22) angeordnet ist.

4. Ausleger nach irgendeinem vorhergehenden Anspruch, wobei die Verbindungsstange (26) eine längenverstellbare Verbindungsstange ist.

5. Ausleger nach Anspruch 4, wobei die Verbindungsstange (26) zwei mittels Gewinde verbundene Abschnitte umfasst, wobei die Länge der Verbindungsstange durch Änderung eines Betrags eines ersten Abschnitts der Verbindungsstange, der durch einen zweiten Abschnitt der Verbindungsstange mittels Gewinde aufgenommen wird, einstellbar ist.

6. Ausleger nach irgendeinem vorhergehenden Anspruch, wobei die Basis (14) drehbar auf einem Dreifuß (12) montiert ist.

7. Ausleger nach irgendeinem vorhergehenden Anspruch, wobei die Last (20) eine Kamera ist.

## Revendications

1. Potence articulée (10) pour déplacer une charge (20), la potence étant supportée sur une base (14) et comprenant :
un premier bras de potence (16) relié par pivot à la base, le premier bras de potence fonctionnant comme une bascule et pouvant pivoter autour d'un premier axe (110) ;
un premier contrepoids (22) disposé sur le premier bras de potence (16) ;
un deuxième bras de potence (18) relié par pivot au premier bras de potence, le deuxième bras de potence pouvant pivoter autour d'un deuxième axe (120) et la charge étant disposée à une extrémité distale du deuxième bras de potence ;
dans laquelle les premier et deuxième bras de potence (16, 18) comportent chacun deux barres d'armature parallèles (30, 32, 74, 76), chacune des barres d'armature dudit premier bras de potence étant relié par pivot à la base et relié au deuxième bras de potence (18) pour former un mécanisme de liaison en parallélogramme ;
un bras de levier (24) relié par pivot soit à la base (14) soit à une plaque de montage (84a) qui est montée sur le premier bras de potence (16) séparé de la base ;
une tige de liaison (26) disposée au-dessus du premier bras de potence (16) et reliant le bras de levier (24) au deuxième bras de potence (18), la tige de liaison (26) étant reliée par pivot au deuxième bras de potence (18) ; et
un deuxième contrepoids (28) disposé à l'extrémité distale du bras de levier (24),
**caractérisée en ce que** le bras de levier (24) s'étend à partir de la tige de liaison (26) suivant un angle montant et **en ce qu'**une longueur (D3) de la tige de liaison (26) qui s'étend entre ses points de raccordement avec le deuxième bras de potence (18) et le bras de levier (24) est inférieure aux longueurs (D1, D2) des barres d'armature (30, 32) du premier bras de potence (16) entre leurs points respectifs de raccordement avec le deuxième bras de potence (18) et avec la base (14) ou la plaque de montage (84a), respectivement.

2. Potence articulée selon la revendication 1, comprenant en outre une entretoise coudée (38) entre le premier bras de potence (16) et le deuxième bras de potence (18), dans lequel le premier bras de potence est relié au deuxième bras de potence au niveau de l'entretoise coudée.

3. Potence articulée selon la revendication 1 ou 2, dans laquelle le bras de levier (24) est relié par pivot à une plaque de montage (84a) qui est reliée par pivot au premier bras de potence (16), et la plaque de montage est disposée entre la base (14) et le premier contrepoids (22).

4. Potence selon l'une quelconque des revendications précédentes dans laquelle la tige de liaison (26) est une tige de liaison de longueur réglable.

5. Potence selon la revendication 4, dans laquelle la tige de liaison (26) comprend deux parties reliées par filetage dans lesquelles la longueur de la tige de liaison peut être réglée par changement d'une quantité d'une première desdites parties de la tige de liaison qui est reçue au moyen d'un filetage par une deuxième desdites parties de la tige de liaison.

6. Potence selon l'une quelconque des revendications précédentes, dans laquelle la base (14) est montée de manière rotative sur un trépied (12).

7. Potence selon l'une quelconque des revendications précédentes dans laquelle la charge (20) est une caméra.
